# FASCICULE DE BREVET EUROPEEN

(11) **EP 3 469 014 B1**
(45) Date de publication et mention de la délivrance du brevet: **14.09.2022**
(21) Numéro de dépôt: 17784337.2
(22) Date de dépôt: 09.06.2017
(51) Int. Cl.: C08G 63/672

(54) **POLYESTER THERMOPLASTIQUE AMORPHE POUR LA FABRICATION DE CORPS CREUX**
AMORPHER THERMOPLASTISCHER POLYESTER ZUR HERSTELLUNG VON HOHLEN ARTIKELN
AMORPHOUS THERMOPLASTIC POLYESTER FOR THE PRODUCTION OF HOLLOW ARTICLES

(30) Priorité: 10.06.2016 FR 1655351
(43) Date de publication de la demande: 17.04.2019
(73) Titulaire: Roquette Frères, 62136 Lestrem (FR)
(72) Inventeur: AMEDRO, Hélène, 62400 Béthune (FR); SAINT-LOUP, René, 59160 Lomme (FR)
(74) Mandataire: Plasseraud IP
(86) Numéro de dépôt international: PCT/FR2017/051472
(87) Numéro de publication internationale: WO 2017/212192

(56) Documents cités:
- US-A1- 2012 177 854

## Description

### Domaine de l'invention

La présente invention se rapporte à l'utilisation d'un polyester thermoplastique amorphe comprenant au moins un motif 1,4 : 3,6-dianhydrohexitol pour la fabrication de corps creux.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al*., un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveau polyester présentant des propriétés améliorées.

Dans le domaine des matières plastiques, et notamment pour la fabrication de corps creux, il est nécessaire de disposer de polyester thermoplastique amorphe aux propriétés améliorées, notamment ayant une viscosité réduite en solution élevée, qui permettent *in fine* de fabriquer des bouteilles présentant une bonne stabilité aux produits chimiques.

On connait du document US 6,126,992 des objets fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'incorporation de l'isosorbide et à l'obtention d'une température de transition vitreuse élevée. De plus, les exemples de préparation mis en œuvre ne permettent pas d'obtenir des polymères présentant des températures de transition vitreuse élevées, au contraire, elles sont même trop basses (106°C pour le polymère de l'exemple 1 et 116°C pour le polymère de l'exemple 2) pour donner entière satisfaction dans la fabrication de corps creux.

Le document US 6,063,465 décrit des récipients en polyester fabriqués à partir d'un polymère ayant des motifs isosorbide, des motifs acide téréphtalique, et des motifs éthylène glycol. Les récipients ainsi fabriqués sont adaptés pour contenir des liquides aussi bien que des solides. Les exemples 1 et 2 présentent la synthèse de polyester à base de diméthyle téréphtalate, d'isosorbide et d'éthylène glycol. Le polymère obtenu selon l'exemple 2 est préparé de la même manière que celui de l'exemple 1 mais présente un taux d'isosorbide supérieur. Le document US 2012/177854 A1 décrit un procédé de préparation de compositions de polyesters à résistance à la chaleur élevée et forte tenue à l'impact pour la fabrication de bouteilles (US 2012/177854 A1, paragraphes [0003] et [0004]). L'exemple 5 décrit une composition comprenant 100 moles d'acide terephthalique, 40 moles d'isosorbide, 55 moles de cyclohexane diméthanol et 5 moles d'éthylène glycol. L'isosorbide est présent avec le cyclohexane diméthanol dans un rapport de 40/(40+55), soit 0,42, valeur qui se trouve dans le domaine de 0,32 et 0,90. De plus l'indice de viscosité est 55 ml/g. En outre, la revendication 7 spécifie que le polyester est utilisé pour préparer des bouteilles. Enfin la temperature de transition vitreuse du polyester de l'exemple 5 est de 130°C. Dans l'exemple 5, la concentration d'éthylène glycol (5 moles) par rapport à la totalité des motifs monomères du polyester (100 moles d'acide terephthalique, 40 moles d'isosorbide, 55 moles de cyclohexane diméthanol, 5 moles d'éthylène glycol) s'élève à 5 / (100+40+55+5), soit 2,5%.

Ainsi, il existe encore à ce jour le besoin de disposer de polyesters thermoplastiques contenant des motifs 1,4 : 3,6-dianhydrohexitol pour la fabrication de corps creux, lesdits polyesters ayant donc des propriétés mécaniques améliorées, pouvant être facilement mis en forme et présentant une bonne stabilité aux produits chimiques.

Il est ainsi du mérite de la Demanderesse d'avoir trouvé que cet objectif pouvait être atteint avec un polyester thermoplastique amorphe à base d'isosorbide ne présentant pas d'éthylène glycol alors qu'il était connu jusqu'à présent que ce dernier était indispensable pour l'incorporation dudit l'isosorbide. En effet, le polyester thermoplastique amorphe utilisé selon la présente invention, grâce à une viscosité et un ratio en motif particuliers, présente des propriétés améliorées pour une utilisation selon l'invention dans la fabrication de corps creux, et notamment de bouteille.

### Résumé de l'invention

L'invention a ainsi pour objet l'utilisation d'un polyester thermoplastique amorphe pour la fabrication de corps creux, ledit polyester thermoplastique amorphe comprenant : au moins un motif 1,4 : 3,6-dianhydrohexitol (A) ;
- au moins un motif diol alicyclique (B) autre que les motifs 1,4 : 3,6-dianhydrohexitol (A)
- au moins un motif acide téréphtalique (C) ;

le ratio molaire (A)/[(A)+(B)] étant d'au moins 0,32 et d'au plus 0,90 et la viscosité réduite en solution supérieure à 50 mL/g,
ledit polyester étant exempt de motifs diol aliphatique non cyclique ou comprenant une quantité molaire de motifs diol aliphatique non cyclique, par rapport à la totalité des motifs monomériques du polyester, inférieure à 1%, dont la viscosité réduite en solution (25°C ; phénol (50%m) : ortho-dichlorobenzène (50%m) ; 5 g de polyester /L) est supérieure à 75 mL/g, ledit polyester présente une température de transition vitreuse allant de 115 à 200 °C.

Ces polyesters possèdent des propriétés thermiques et mécaniques améliorées et notamment une bonne tenue thermique du fait d'une température de transition vitreuse élevée, ce qui est particulièrement intéressant pour la fabrication de corps creux.

### Description détaillée de l'invention

Un premier objet de l'invention concerne l'utilisation d'un polyester thermoplastique amorphe pour la fabrication de corps creux, ledit polyester thermoplastique amorphe comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
le ratio molaire (A)/[(A)+(B)] étant d'au moins 0,32 et d'au plus 0,90 et la viscosité réduite en solution supérieure à 50 mL/g.

Par ratio molaire (A)/[(A)+(B)] on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique amorphe est exempt de motifs diol aliphatiques non cycliques ou en comprend une faible quantité.

Par « faible quantité molaire de motifs diol aliphatique non cyclique», on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique amorphe présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol, ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. D'une manière préférentielle, le diol alicyclique (B) est le 1,4-cyclohexanedimethanol.

Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) étant d'au moins 0,32 et d'au plus 0,90.

Un polyester thermoplastique amorphe particulièrement adapté pour la fabrication de corps creux comprend:
- une quantité molaire de motifs 1,4 : 3,6-dianhydrohexitol (A) allant de 16 à 54 % ;
- une quantité molaire de motifs diol alicyclique (B) autre que les motifs 1,4 : 3,6-dianhydrohexitol (A) allant de 5 à 30 % ;
- une quantité molaire de motifs acide téréphtalique (C) allant de 45 à 55 %.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques amorphes utilisés selon l'invention présentent une température de transition vitreuse allant de 115 à 200 °C, par exemple de 140 à 190 °C.

La température de transition vitreuse est mesurée par les méthodes classiques et notamment une méthode de calorimétrie différentielle à balayage (DSC) en utilisant une vitesse de chauffe de 10°C/min. Le protocole expérimental est détaillé dans la partie exemples ci-après.

Le polyester thermoplastique amorphe présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab

Enfin, la viscosité réduite en solution supérieure à 50 mL/g et inférieure à 120 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère amorphe des polyesters thermoplastiques utilisés selon la présente invention se caractérise, par l'absence de raies de diffraction aux rayons X ainsi que par l'absence d'un pic de fusion endothermique en Analyse Calorimétrique Différentielle à Balayage (DSC).

Le polyester thermoplastique amorphe tel que précédemment défini présente bien des avantages pour la fabrication de corps creux.

En effet grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), les polyesters thermoplastiques amorphes ont une meilleure tenue thermique ce qui permet aux corps creux fabriqués à partir de ces derniers de présenter une bonne stabilité aux produits chimiques.

Un produit chimique au sens de la présente invention peut par exemple être un alcool tel que l'éthanol, le méthanol, l'ispopropanol ou leur mélange, une cétone telle que l'acétone, la méthyléthylcétone ou leur mélange, un hydrocarbone aliphatique comme par exemple le toluène ou le xylène, un hydrocarbone aromatique comme par exemple le cyclohexane ou l'heptane, de l'essence ou encore un terpène comme par exemple le limonène.

Le produit chimique peut être un produit chimique usuel comme par exemple un détergent, de la lessive, du cirage ou encore du produit vaisselle. Enfin, le produit chimique peut également être un produit cosmétique comme par exemple un agent démaquillant, du fond de teint, de la crème solaire ou encore un parfum.

Un corps creux au sens de la présente invention est un corps creux essentiellement constitué de plastique et peut être par exemple une bouteille, un flacon, un bidon, un fût ou encore un réservoir. De préférence le corps creux est une bouteille.

La fabrication du corps creux peut se faire par les techniques connues de l'homme du métier comme par exemple l'extrusion-soufflage ou l'injection. De préférence la fabrication est réalisée par extrusion-soufflage. Selon cette méthode, une paraison est formée en continu avec le polyester thermoplastique amorphe avant d'être prise dans un moule puis soufflée afin de prendre la forme désirée.

La forme et le volume du corps creux fabriqué sont fonctions des caractéristiques du moule utilisé pour le soufflage. Concernant le volume, il peut varier de quelques cm³ à quelques m³, notamment de 20 cm³ à 0.1 m³ et de préférence de 100 cm³ à 5000 cm³, et encore plus particulièrement de 500 cm³ à 2000 cm³, comme par exemple 1500 cm³.

Le polyester thermoplastique amorphe peut être conditionné sous une mise en forme manipulable telle que des pellets ou des granulés avant d'être utilisé pour la fabrication de corps creux. Ainsi, par exemple, pour une fabrication selon la technique de l'extrusion soufflage, le polymère thermoplastique amorphe est introduit sous forme de granulés.

Selon un mode de réalisation particulier et indépendamment de la méthode utilisée pour la fabrication du corps creux, le polyester thermoplastique amorphe précédemment défini est utilisé en combinaison avec un polymère additionnel.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéthers cétones et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Lors de la fabrication du corps creux à partir du polyester thermoplastique amorphe, un ou plusieurs additifs peuvent également être ajoutés afin de conférer des propriétés particulières au produit fini.

Ainsi, l'additif peut être par exemple un antioxydant tel qu'un phénol encombré stériquement ou un phosphonate ou encore, être un colorant.

L'utilisation de la présente invention de polyesters thermoplastiques amorphes tels que précédemment définis pour la fabrication de corps creux est particulièrement avantageuse car elle permet d'obtenir des corps creux présentant une bonne stabilité aux produits chimiques.

Un second objet de l'invention concerne des corps creux comprenant le polyester thermoplastique amorphe décrit ci-dessus. Les corps creux peuvent également comprendre un polymère additionnel et/ou un ou plusieurs additifs tels que définis précédemment.

Le polyester thermoplastique amorphe particulièrement adapté pour la fabrication de corps creux peut être préparé par un procédé de fabrication comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique amorphe.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de corps creux.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US 2011/282020 A1 aux paragraphes [0026] à [0029], et à la page 5 de la demande WO 2013/062408 A1.

De préférence, on utilise lors du premier stade de transestérification, un dérivé de zinc, ou un dérivé de manganèse, d'étain ou de germanium. A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US 2011/282020 A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Le procédé comprend en outre une étape de récupération du polyester à l'issue de l'étape de polymérisation. Le polyester thermoplastique amorphe ainsi récupéré est ensuite mis en forme tel que décrit précédemment.

L'invention sera mieux comprise à l'aide des exemples et figure ci-après.

### Exemple

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : l'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage. De même la détermination de l'enthalpie de fusion (aire sous la courbe) est réalisée au premier chauffage.

Pour les exemples illustratifs présentés ci-dessous les réactifs suivants ont été utilisés :
1,4-Cyclohexane dimethanol (pureté 99%, mélange d'isomères cis et trans)
Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich

### Préparation du polyester thermoplastique amorphe et utilisation pour la fabrication de bouteille par extrusion-soufflage.

### A : Polymérisation

Dans un réacteur de 7,5L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C. Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90minutes selon une rampe logarithmique et la température amenée à 285°C. Ces conditions de vide et de température ont été maintenues jusqu'à obtenir une augmentation de couple de 10Nm par rapport au couple initial. Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 54.9mUg. L'analyse par RMN 1H du polyester montre que le polyester final contient 44mol% d'isosorbide par rapport aux diols. En ce qui concerne les propriétés thermiques (relevées au second chauffage), le polymère présente une température de transition vitreuse de 125°C.

La résine ainsi obtenue a une viscosité réduite en solution de 54.9mUg. L'analyse par RMN 1H du polyester montre que le polyester final contient 44mol% d'isosorbide par rapport aux diols. En ce qui concerne les propriétés thermiques (relevées au second chauffage), le polymère présente une température de transition vitreuse de 125°C.

### B : Réalisation de corps creux par extrusion de paraison

Les granulés de PITG obtenus à l'étape A de polymérisation sont séchés sous vide à 110°C afin d'atteindre des taux d'humidité résiduelle inférieurs à 300 ppm, dans cet exemple, la teneur en eau des granulés est de 230 ppm. Les granulés, maintenus en atmosphère sèche sont introduits dans la trémie de l'extrudeuse.

L'extrusion s'effectue sur une souffleuse HESTA HV200 et les réglages sont regroupés dans le tableau 1 ci-dessous :

**TABLEAU 1**

| **Dénomination** | **Unités** | **Valeurs** |
|---|---|---|
| Température du plastique à l'état fondu (extrudeuse / filière) | °C | 250/250/260/260/270/270 |
| Température du moule | °C | 50 |
| Vitesse d'injection | rpm | 100 |
| Temps de soufflage | sec | 7 |
| Temps de contrôle | s | 1 |
| Chute de pression admissible | mbar | 5 |
| Temps de cycle | s | 15 |
| Cadence | Bouteille/heure | 240 |

Grâce à une filière annulaire, une paraison est extrudée en continu. Le moule vient se refermer autour de la paraison, une lame vient couper la paraison sur le haut du moule et ce dernier est transféré sur un deuxième poste de travail.

A ce moment-là, une canne de soufflage vient injecter de l'air comprimé à l'intérieur de la paraison afin de le plaquer sur les parois du moule. La matière fondue est maintenue sous pression et refroidie contre les parois.

Ensuite, le moule est transféré vers le dernier poste de travail où un couteau vient ébavurer le surplus de matière et un test d'étanchéité est réalisé en maintenant la bouteille sous pression.

Enfin, après ouverture du moule, la pièce est éjectée et le moule retourne à sa position initiale pour se refermer sur une nouvelle paraison.

La bouteille ainsi formé présente une répartition de matière homogène, son volume est de 1L et après ébavurage, la masse de la pièce est de 77g. De plus, elle présente une bonne stabilité aux produits chimiques.

## Revendications

1. Utilisation d'un polyester thermoplastique amorphe pour la fabrication de corps creux, ledit polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g,
ledit polyester présente une température de transition vitreuse allant de 115 à 200 °C, déterminée comme indiqué dans la description.

2. Utilisation selon la revendication 1 **caractérisé en ce que** ledit polyester présente une température de transition vitreuse allant de 140 à 190 °C.

3. Corps creux comprenant un polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g, ledit polyester présente une température de transition vitreuse allant de 115 à 200 °C, déterminée comme indiqué dans la description.

4. Corps creux selon la revendication 3 **caractérisé en ce que** ledit polyester présente une température de transition vitreuse allant de 140 à 190°.

5. Utilisation selon la revendication 1 ou corps creux selon la revendication 3, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

6. Utilisation selon l'une quelconque des revendications 1, 2 ou 5 ou corps creux selon la revendication 3 ou 4, **caractérisé en ce que** le 1,4 : 3,6-dianhydrohexitol (A) est l'isosorbide.

7. Utilisation selon l'une quelconque des revendications 1, 2, 5 ou 6 ou corps creux selon l'une quelconque des revendications 3 ou 4, **caractérisé en ce que** la fabrication est réalisée par extrusion-soufflage ou par injection.

8. Utilisation selon l'une quelconque des revendications 1, 2, 5 ou 6 ou corps creux selon l'une quelconque des revendications 3 ou 4, **caractérisé en ce que** corps creux comprend en outre un additif tel qu'un antioxydant ou un colorant.

## Patentansprüche

1. Verwendung eines amorphen thermoplastischen Polyesters zur Herstellung von Hohlkörpern, wobei der amorphe thermoplastische Polyester umfasst:
• wenigstens eine 1,4:3,6-Dianhydrohexitol-Einheit (A);
• wenigstens eine alicyclische Diol-Einheit (B), die von den 1,4:3,6-Dianhydrohexitol-Einheiten (A) verschieden ist;
• wenigstens eine Terephthalsäure-Einheit (C);
wobei das Molverhältnis (A)/[(A)+(B)] wenigstens 0,32 und höchstens 0,90 beträgt; wobei der Polyester frei von nicht cyclischen aliphatischen Diol-Einheiten ist oder eine molare Menge an nicht cyclischen aliphatischen Diol-Einheiten, bezogen auf die gesamten Monomer-Einheiten des Polyesters, von weniger als 1 % umfasst und dessen reduzierte Viskosität in Lösung (25 °C; Phenol (50 %m) : ortho-Dichlorbenzol (50 %m); 5 g/l Polyester) größer als 50 ml/g ist,
wobei der Polyester eine Glasübergangstemperatur im Bereich von 115 bis 200 °C aufweist, die wie in der Beschreibung angegeben bestimmt wird.

2. Verwendung nach Anspruch 1, **dadurch gekennzeichnet, dass** der Polyester eine Glasübergangstemperatur von 140 bis 190 °C aufweist.

3. Hohlkörper, umfassend einen amorphen thermoplastischen Polyester, umfassend:
• wenigstens eine 1,4:3,6-Dianhydrohexitol-Einheit (A);
• wenigstens eine alicyclische Diol-Einheit (B), die von den 1,4:3,6-Dianhydrohexitol-Einheiten (A) verschieden ist;
• wenigstens eine Terephthalsäure-Einheit (C);
wobei das Molverhältnis (A)/[(A)+(B)] wenigstens 0,32 und höchstens 0,90 beträgt;
wobei der Polyester frei von nicht cyclischen aliphatischen Diol-Einheiten ist oder eine molare Menge an nicht cyclischen aliphatischen Diol-Einheiten, bezogen auf die gesamten Monomer-Einheiten des Polyesters, von weniger als 1 % umfasst und dessen reduzierte Viskosität in Lösung (25 °C; Phenol (50 %m) : ortho-Dichlorbenzol (50 %m); 5 g/l Polyester) größer als 50 ml/g ist, wobei der Polyester eine Glasübergangstemperatur im Bereich von 115 bis 200 °C aufweist, die wie in der Beschreibung angegeben bestimmt wird.

4. Hohlkörper nach Anspruch 3, **dadurch gekennzeichnet, dass** der Polyester eine Glasübergangstemperatur von 140 bis 190 °C aufweist.

5. Verwendung nach Anspruch 1 oder Hohlkörper nach Anspruch 3, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, stark bevorzugt 1,4-Cyclohexandimethanol.

6. Verwendung nach einem der Ansprüche 1, 2 oder 5 oder Hohlkörper nach Anspruch 3 oder 4, **dadurch gekennzeichnet, dass** das 1,4: 3,6-Dianhydrohexitol (A) Isosorbid ist.

7. Verwendung nach einem der Ansprüche 1, 2, 5 oder 6 oder Hohlkörper nach einem der Ansprüche 3 oder 4, **dadurch gekennzeichnet, dass** die Herstellung durch Extrusionsblasformen oder durch Spritzgießen erfolgt.

8. Verwendung nach einem der Ansprüche 1, 2, 5 oder 6 oder Hohlkörper nach einem der Ansprüche 3 oder 4, **dadurch gekennzeichnet, dass** der Hohlkörper ferner einen Zusatzstoff wie ein Antioxidationsmittel oder einen Farbstoff aufweist.

## Claims

1. The use of an amorphous thermoplastic polyester for the production of hollow articles, said amorphous thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 1%, and the reduced viscosity in solution (25°C; phenol (50%m): ortho-dichlorobenzene (50%m); 5 g/l of polyester) of said polyester being greater than 50 ml/g said polyester having a glass transition temperature ranging from 115 to 200°C, measured as indicated in the description.

2. The use as claimed in claim 1 wherein said polyester having a glass transition temperature ranging from 140 to 190°C.

3. A hollow article comprising an amorphous thermoplastic polyester comprising:
• at least one 1,4:3,6-dianhydrohexitol unit (A);
• at least one alicyclic diol unit (B) other than the 1,4: 3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 1%, and the reduced viscosity in solution (25°C; phenol (50%m): ortho-dichlorobenzene (50%m); 5 g/l of polyester) of said polyester being greater than 50 ml/g, said polyester having a glass transition temperature ranging from 115 to 200°C, measured as indicated in the description.

4. The hollow article as claimed in claim 3 wherein said polyester having a glass transition temperature ranging from 140 to 190°C.

5. The use as claimed in claim 1 or the hollow article as claimed in claim 3, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

6. The use as claimed in either of claims 1, 2 or 5 or the hollow article as claimed in in either of claims 3 or 4, **characterized in that** the 1,4: 3,6-dianhydrohexitol (A) is isosorbide.

7. The use as claimed in any one of claims 1, 2, 5 or 6 or the hollow article as claimed in any one of claims 3 or 4, **characterized in that** the production is carried out by extrusion blow-molding or injection molding.

8. The use as claimed in any one of claims 1, 2, 5 or 6 or the hollow article as claimed in any one of claims 3 or 4, **characterized in that** the hollow article also comprises an additive such as an antioxidant or a dye.
